# EUROPEAN PATENT APPLICATION

(11) **EP 1 492 213 A1**
(43) Date of publication of application: **29.12.2004**
(21) Application number: 03715741.9
(22) Date of filing: 02.04.2003
(51) Int. Cl.: H02K 1/27, H02K 19/10

(54) **MOTOR ROTOR**

(30) Priority: 03.04.2002 JP 2002101279
(71) Applicant: Kabushiki Kaisha Toshiba, Tokyo 105-8001 (JP)
(72) Inventor: SHIGA, Tsuyoshi, Nagoya-shi, Aichi 465-0055 (JP)
(74) Representative: O'Connell, David Christopher
(86) International application number: PCT/JP2003/004240
(87) International publication number: WO 2003/088451

(57) **Abstract**

A rotor for an electric motor having a stator includes a frame (11) made of a magnetic material and a plurality of magnets (12) each made of sintered magnetic powder and each endowed with a magnetic anisotropy. Each magnet (12) has a north pole or a south pole. The magnets (12) are disposed at a stator side cf the frame (11) so that the north and south poles are alternately arranged.

## Description

### FIELD OF ART

This invention relates generally to electric motors and more particularly to a rotor for electric motors which includes a frame and magnets disposed at a stator side of the frame.

### BACKGROUND ART

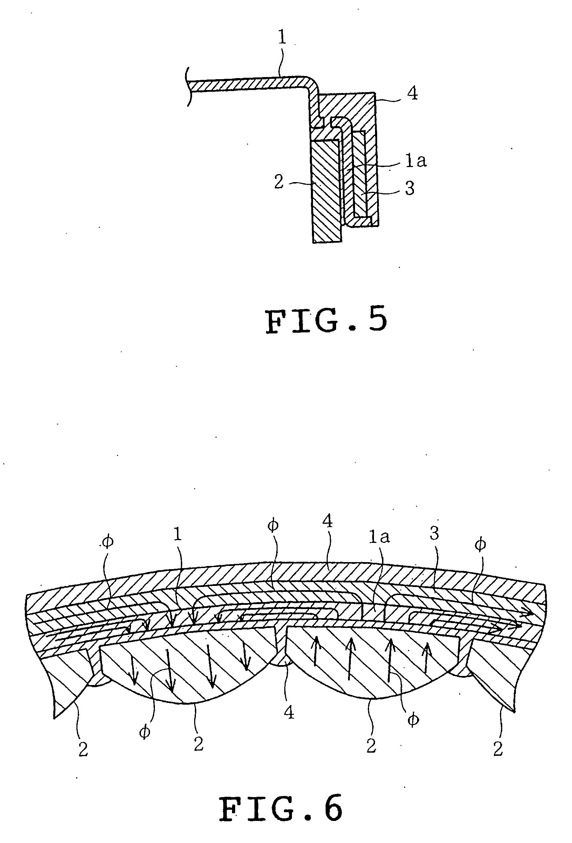

FIGS. 5 and 6 illustrate a conventional rotor for an electric motor. The rotor includes a frame 1 made by forming a magnetic material such as iron plate into a generally lidded flat cylindrical case. The frame 1 includes a circumferential wall 1a positioned around a stator (not shown). Thus, the motor is of an outer rotor type in which a rotor is positioned outside a stator. A plurality of magnets 2 are arranged along an overall inner circumferential face of the wall 1a, which face is a left-hand side of the wall 1a as viewed in FIG. 5 and a lower side of the wall 1a as viewed in FIG. 6. Each magnet 2 is oriented so that magnetic flux φ normally flows radially from the stator side to an opposite side. Accordingly, the frame 1 is required to serve as a back yoke or to have a sufficient thickness to cause the magnetic flux φ having flowed from each magnet 2 to reflow into the adjacent magnets.

When the magnet 2 has a large magnetic force, the thickness of the frame 1 is sometimes excessively large such that the forming of the magnet becomes difficult. In view of this problem, a ring 3 serving as a second back yoke is attached to an outer circumferential face of the frame 1 which is the side opposite to the inner circumferential face. The outer circumferential face of the frame 1 is a right-hand side as viewed in FIG. 5 and an upper side as viewed in FIG. 6. Consequently, the magnetic flux can reflow sufficiently with the ring 3 compensating for the thickness of the frame 1. In this case, the ring 3 needs to be joined to the frame 1 magnetically and mechanically securely as well as the magnets 2. For this purpose, a synthetic resin mold 4 is applied to gaps between the magnets 2 and to the outer circumference of the ring 3 by means of molding so that the magnets 2 and ring 3 are fixed to the circumferential wall 1a of the frame 1.

As described above, when the magnetic force of each magent 2 is large, the conventional rotor necessitates the frame 1 having a relatively large thickness in order that the magnetic flux φ flowing through the magnets 2 may be caused to reflow sufficiently. The ring 3 is also required for this purpose. Additionally, the synthetic resin mold 4 also necessitates a large volume. As a result, an increased weight of the rotor results in reductions in the motor characteristic, for example, an increase in an inertia torque of the motor, and an increase in the costs.

On the other hand, when the thickness of the frame 1 is not increased and no ring 3 is used in the conventional rotor, the magnetic flux φ flowing through each magnet 2 does not reflow sufficiently such that an amount of magnetic force applied to the stator is reduced and the magnetic force is prevented from uniform distribution. As a result, the motor characteristics are reduced, for example, noise and vibration due to operation of the motor are increased.

The present invention was made in view of the foregoing circumstance and an object thereof is to provide a rotor for the electric motor in which the magnetic flux flowing through each magnet can sufficiently be caused to reflow while reductions in the weight of the motor and costs can be achieved.

### SUMMARY OF THE INVENTION

The present invention provides a rotor for an electric motor having a stator, characterized by a frame made of a magnetic material, and a plurality of magnets each made of sintered magnetic powder and each endowed with a magnetic anisotropy, each magnet having a north pole or a south pole, the magnets being disposed at a stator side of the frame so that the north and south poles are alternately arranged.

In the above-described rotor, each magnet is endowed with the magnetic anisotropy, and the magnets are disposed so that the north and south poles are alternately arranged. Accordingly, the magnetic flux is oriented from one magnet to the magnets adjacent said one magnet such that the flux reflowing into the adjacent magnets is increased and the flux reflowing into the frame is reduced. Consequently, the thickness of the frame need not be increased and no ring serving as a back yoke is also required. Furthermore, a required amount of synthetic resin mold is also reduced. Consequently, reductions in the weight of the rotor and in the costs can be achieved.

### BRIEF DESCRIPTION OF THE DRAWINGS

FIG. 1 is an enlarged cross-section of a rotor in accordance with one embodiment of the present invention;
FIG. 2 is a partial longitudinal section of the rotor;
FIG. 3 is cross-section of the rotor;
FIG. 4 is a view similar to FIG. 1, showing a rotor in accordance with a second embodiment of the present invention;
FIG. 5 is a view similar to FIG. 2, showing a conventional rotor; and
FIG. 6 is a view similar to FIG. 1, showing the conventional rotor.

### BEST MODE FOR CARRYING OUT THE INVENTION

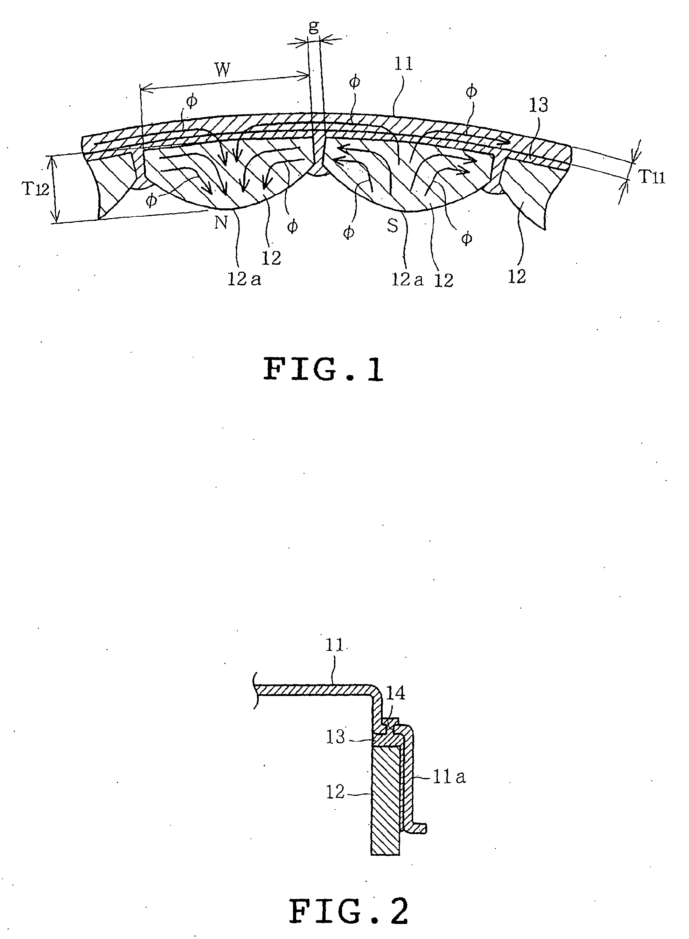

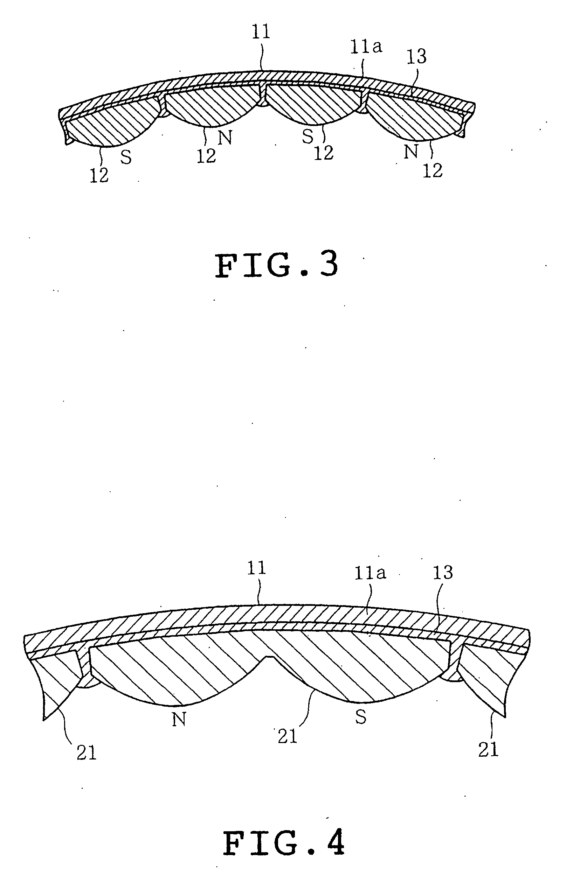

A first embodiment will be described with reference to FIGS. 1 to 3. Referring to FIGS. 2 and 3, the rotor includes a frame 11 made by pressing a magnetic material such as iron plate into a generally lidded flat cylindrical case. The frame 11 includes a circumferential wall 11a positioned around a stator (not shown). Thus, an electric motor including the rotor is of an outer rotor type in which a rotor is positioned outside a stator. A plurality of magnets 12 are arranged along an overall inner circumferential face of the wall 11a, which face is a left-hand side of the wall 11a as viewed in FIG. 2 and a lower side of the wall 11a as viewed in FIG. 3. The magnets 12 are disposed at a stator side of the frame 11 so that north and south poles are alternately arranged. A synthetic resin mold 13 is applied to gaps between the magnets 12 and further between the frame 11 and each magnet 12 by means of molding so that the magnets 2 are fixed to the circumferential wall 11a of the frame 11. In this case, the frame 11 has a plurality of holes 14 which are formed therein so as to be arranged circumferentially as shown in FIG. 2. The magnets 12 can be fixed to the frame 11 more securely when the mold 13 is also applied through the holes 14.

Each magnet 12 is made by sintering magnetic powder of iron oxide, for example. Each magnet 12 is endowed with a magnetic anisotropy so that magnetic flux φ tends to flow to the stator side as shown by arrows in FIG. 1. In the sintering and endowment of magnetic anisotropy, for example, the magnetic powder is fed into a cavity in a molding die together with water to be left in a free state. The magnetic powder is pressed to be hardened and sintered with the cavity being drained while a magnetic field is established so that the magnetic flux φ flows in a manner as described above.

Each magnet 12 has a magnetic force which is at or above 316 MA/m (reference value: 4 Moe). Furthermore, the frame 11 has a thickness T11 which is equal to or smaller than a one-fifth of a thickness T12 of each magnet 12. Furthermore, the magnets 12 are arranged with a gap g between each magnet and the adjacent magnet and the gap g is equal to or smaller than a one-tenth of a width W of each magnet 12. Additionally, each magnet 12 has a face 12a positioned at the stator side. The face 12a is convex toward the stator side and includes a middle portion located nearer to the stator side than the other portion thereof.

In the foregoing rotor, each magnet 12 is made of the sintered magnetic powder and is endowed with the magnetic anisotropy so that the magnetic flux φ tends to flow to the stator side. A plurality of the magnets 12 are disposed at the stator side of the frame 11 so that the north and south poles are alternately arranged. Consequently, most of the magnetic flux φ reflows into the adjacent magnets 12 and an amount of magnetic flux flowing into the frame 11 is reduced. Consequently, the thickness of the frame 11 need not be increased and no ring serving as a back yoke is required. Furthermore, a required volume or amount of synthetic resin mold is also reduced. Consequently, reductions in the weight of the rotor and in the costs can be achieved.

Each magnet 12 made of the sintered magnetic powder has a larger amount of magnetic powder as compared with the case where a plastic magnet is made by mixing plastic serving as a binder and magnetic powder. Accordingly, since a large magnetic force is obtained, an inexpensive magnetic powder with an ordinary magnetic permeability can be used. The plastic magnet contains a smaller amount of magnetic powder and accordingly, an expensive magnetic powder with a high magnetic permeability needs to be used in order that a large magnetic force is achieved. Thus, the costs can further be reduced in the rotor of the embodiment.

In the above-described rotor, each magnet 12 has a magnetic force which is at or above 316 MA/m. Thus, the magnetic force of each magnet 12 is large. As described above, however, a high performance can be achieved since most of the magnetic flux φ reflows into the adjacent magnets 12. Additionally, the thickness T11 of the frame 11 is set to be equal to or smaller than a one-fifth of the thickness T12 of each magnet 12. For example, the thickness T11 of the frame 11 is set to be equal to or smaller than 2 mm when the magnetic force of each magnet 12 is at or above 316 MA/m as described above. Consequently, the weight and costs of the rotor can further be reduced. Additionally, the frame can readily be machined.

Furthermore, the gap g between each magnet 12 and the adjacent one set to be equal to or smaller than a one-tenth of the width W of each magnet 12. Consequently, since a magnetic resistance is reduced when the magnetic flux φ flows into the adjacent magnet 12 and accordingly tends to reflow easily, the characteristics of the motor can be improved. Furthermore, the face 12a of each magnet 12 positioned at the stator side is convex toward the stator side and includes a middle portion located nearer to the stator side than the other portion thereof. Accordingly, a gap between the face 12a of each magnet 12 and the stator is smallest at the middle portion of the face 12a and largest at both ends of each magnet. The magnetic resistance in the gap is accordingly smallest at the middle portion of the face 12a and largest at both ends of each magnet. Consequently, since the flux density in the gap approximates to a sinusoidal form such that an amount of special harmonics is reduced, torque ripple and accordingly, vibration and noise can be reduced.

A technique for endowing each magnet 12 with the magnetic anisotropy has a high level of difficulty. In the technique, approximating the flux density to the sinusoidal waveform is difficult. In the foregoing rotor, however, the approximation can be achieved by rendering the face 12a of each magnet 12 convex. Consequently, the difficulty in the manufacturing technique can be reduced.

FIG. 4 illustrates a second embodiment of the invention. Similar or identical parts are labeled by the same reference symbols in the second embodiment as those in the foregoing embodiment. Only the difference of the second embodiment from the first embodiment will be described with the description of the similar or identical parts being eliminated.

Each magnet 12 has either north or south pole in the foregoing embodiment. Each magnet 21 has a plurality of poles, two in the second embodiment. Thus, each magnet 21 has north and south poles in the second embodiment. Consequently, since the magnetic resistance is further reduced when the magnetic flux φ flows into the adjacent magnet 12 and accordingly tends to reflow further easily, the characteristics of the motor can be improved.

The motor including the each foregoing rotor is of an outer rotor type in which a rotor is positioned outside a stator. However, the rotor of the invention may be applied to an electric motor of the inner rotor type in which a rotor is positioned inside a stator, instead.

### INDUSTIRAL APPLICABILITY

As described above, the rotor of the present invention is useful as improving the motor characteristics while light weight and cost reduction are achieved, when constructed into an electric motor.

## Claims

1. A rotor for an electric motor having a stator, **characterized by**:
a frame made of a magnetic material; and
a plurality of magnets each made of sintered magnetic powder and each endowed with a magnetic anisotropy, each magnet having a north pole or a south pole, the magnets being disposed at a stator side of the frame so that the north and south poles are alternately arranged.

2. A rotor according to claim 1, **characterized in that** each magnet has a magnetic force which is at or above 316 MA/m.

3. A rotor according to claim 2, **characterized in that** the frame has a thickness which is equal to or smaller than a one-fifth of a thickness of each magnet.

4. A rotor according to claim 2, **characterized in that** the magnets are arranged with a gap between each magnet and the adjacent magnet and the gap between the adjacent magnets is equal to or smaller than a one-tenth of a width of each magnet.

5. A rotor according to claim 1, **characterized in that** each magnet has a face positioned at a side of the stator, and the face is convex toward the stator side and includes a middle portion located nearer to the stator side than the other portion thereof.

6. A rotor according to claim 1, **characterized in that** each magnet has both north and south poles.
